# EUROPEAN PATENT SPECIFICATION

(11) **EP 1 160 894 B1**
(45) Date of publication and mention of the grant of the patent: **14.07.2010**
(21) Application number: 01304100.9
(22) Date of filing: 04.05.2001
(51) Int. Cl.: H01M 2/06

(54) **Compression glass-to-metal seal**
Kompressions-Glas-Metall-Dichtung
Joint de compression verre-métal

(30) Priority: 04.05.2000 US 202015 P
(43) Date of publication of application: 05.12.2001
(73) Proprietor: Greatbatch Ltd., Clarence, NY 14031 (US)
(72) Inventor: Frysz, Christine A, New Milford, CT 06776 (US); Hornung, Harvey A., Clarence, NY 14731 (US); Prinzbach, Joseph M., North Tonawanda, NY 14120 (US)
(74) Representative: Duckett, Anthony Joseph

(56) References cited:
- EP-A- 0 412 655
- EP-A- 0 989 623
- WO-A-91/06129
- GB-A- 2 056 753
- US-A- 3 035 372
- US-A- 3 225 132
- US-A- 4 915 719
- US-A- 5 709 724

## Description

### CROSS-REFERENCE TO RELATED APPLICATION

The present application claims priority based on provisional application Serial No. 60/202,015, filed May 4, 2000.

### BACKGROUND OF THE INVENTION

### 1. Field of the Invention

The present invention generally relates to the conversion of chemical energy to electrical energy and, more particularly, to a glass-to-metal seal (GMTS) for hermetically sealing an electrochemical cell. The glass-to-metal seal is considered critical because it hermetically isolates the internal environment of a component from the external environment to which the component is exposed. In electrochemical cells powering implantable medical devices, the GTMS hermetically seals the internal cell chemistry from the internal device environment.

### 2. Prior Art

The glass-to-metal seal of an electrochemical cell consists of a ferrule sleeve secured to an opening in the cell casing, such as in the lid or in the casing body itself. The ferrule supports an insulating glass in a surrounding relationship and the glass in turn seals around the perimeter of a terminal lead. The terminal lead extends from inside the cell to a position outside the casing, and serves as the lead for one of the cell electrodes. Typically the terminal lead is connected to the cathode current collector. The casing including the lid serves as the second terminal for the other electrode, typically the anode. This configuration is referred to as a case-negative design.

To construct a glass-to-metal seal, insulating glass is provided in a ring shape to fit inside the ferrule sleeve or inside an opening in the casing body in a closely spaced relationship. The insulating glass has a hole through its center which receives the terminal lead in a closely spaced relationship. These components are assembled and then heated in an furnace. This heating step causes the glass to soften and flow into intimate contact with the inside of the ferrule and with the perimeter of the terminal lead. When the assembly cools, the insulating glass is bonded to the ferrule and the terminal lead.

Glass-to-metal seals are defined by the coefficient of thermal expansion of the materials of construction. Conventional glass-to-metal seals fall into two main types. The first is a matched seal where the coefficient of thermal expansions of all of the materials of construction are reasonably similar. The other is referred to as a compression seal. In this type, the coefficient of thermal expansion of the ferrule sleeve or of the casing body is higher than that of the insulating glass while the coefficients of thermal expansion of the terminal lead and the insulating glass are substantially the same. Compression type glass-to-metal seals are shown in U.S. Patent Nos. 3,225,132 to Baas et al., 4,053,692 to Dey, 4,430,376 to Box and 4,587,144 to Kellerman et al.

Further examples of glass-to-metal seals can be found in International patent application WO 91/06129 to Taylor et al., in European patent application EP-A-0989623 to Spillman et al., and in U.S. Patent Nos. 5,709,724 to Naugler et al., 4,915,719 to Saffari, and 4,833,049 to Teaford et al.

### SUMMARY OF THE PRESENT INVENTION

The present invention provides a reverse mismatched compression glass-to-metal seal which comprises:
a) an insulating glass;
b) a terminal lead; and
c) a support
wherein the insulating glass extends between and seals to the terminal lead and the support surrounding the insulating glass, and wherein the insulating glass has a first coefficient of thermal expansion which is less than a second coefficient of thermal expansion of the terminal lead and wherein the second coefficient of thermal expansion is less than a third coefficient of thermal expansion of the support **characterized in that** the first coefficient of thermal expansion and the second coefficient of thermal expansion differ by more than 2.0 x 10⁻⁶/°C and the second coefficient of thermal expansion and the third coefficient of thermal expansion differ by more than 2.0 x 10⁻⁶/°C.

Theoretically, seals made with a terminal lead having a coefficient of thermal expansion greater than the insulating glass should display stress levels that compromise hermiticity.

The present invention also provides an electrochemical cell comprising an anode electrode and a cathode electrode housed inside a casing and activated with an electrolyte wherein one of the anode electrode and the cathode electrode is connected to a terminal lead insulated from the casing by a glass-to-metal seal, said glass-to-metal seal having an insulating glass extending between and sealed to a support portion of the casing and the terminal lead wherein the insulating glass has a first coefficient of thermal expansion which is less than a second coefficient of thermal expansion of the terminal lead and wherein the second coefficient of thermal expansion is less than a third coefficient of thermal expansion of the casing support portion **characterised in that** the first coefficient of thermal expansion and the second coefficient of thermal expansion differ by more than 2.0 x 10⁻⁶/°C and the second coefficient of thermal expansion and the third coefficient of thermal expansion differ by more than 2.0 x 10⁻⁶/°C.

The present invention further provides a method for providing an electrochemical cell as described above comprising the steps of:
a) providing an anode electrode and a cathode electrode in electrical association with each other housed inside a casing and activated with an electrolyte;
b) connecting one of the anode electrode and the cathode electrode to a terminal lead;
c) connecting the other of the anode electrode and the cathode electrode to the casing;
d) electrically segregating the terminal lead from the casing by the provision of an insulating glass extending between and sealing to the casing and the terminal lead wherein the insulating glass has a first coefficient of thermal expansion which is less than a second coefficient of thermal expansion of the terminal lead and wherein the second coefficient of thermal expansion is less than a third coefficient of thermal expansion of the casing **characterized in that** the first coefficient of thermal expansion and the second coefficient of thermal expansion differ by more than 2.0 x 10⁻⁶/°C and the second coefficient of thermal expansion and the third coefficient of thermal expansion differ by more than 2.0 x 10⁻⁶/°C thus providing a glass-to-metal seal in accordance with the above description.

These and other objects of the present invention will become increasingly more apparent to those of ordinary skill in the art by reference to the following description and the appended drawings.

### BRIEF DESCRIPTION OF THE DRAWINGS

Fig. 1 is a schematic view of an exemplary glass-to-metal seal having a ferrule supporting the insulating glass.
Fig. 2 is a schematic view of an exemplary glass-to-metal seal having the glass sealed directly to the casing.

### DESCRIPTION OF THE PREFERRED EMBODIMENTS

A typical hermetic glass-to-metal seal consists of a terminal lead electrically isolated from a ferrule or the casing body by an insulating glass. The individual materials chosen for these applications are critical and must meet the following design criteria. First, the terminal lead must be corrosion resistant to the internal cell chemistry, be weldable and modifiable for attachment to the end users product, and have sufficient electrically conductivity for the particular cell design. Secondly, the insulating glass needs to be corrosion resistant to the internal cell chemistry, and have sufficient electrical resistivity for the particular cell design. Lastly, the ferrule or casing body must be corrosion resistant to the internal cell chemistry, have sufficient electrically conductivity for the particular cell design, and be weldable for secondary operations.

When these components are manufactured into a glass-to-metal seal, accomplished by assembling the components together followed by heating in a furnace, the resultant seal must also meet the following design criteria: the assembly must be hermetic, the insulating glass must exhibit acceptable visual characteristics, i.e., have no cracks that affect function, and there must be sufficient electrical resistivity between the ferrule or casing body and the terminal lead for the cell design. Also, the glass-to-metal seal must exhibit acceptable thermal resistant to secondary processing such as welding and it must be mechanically tolerant to secondary processing such as terminal lead bending.

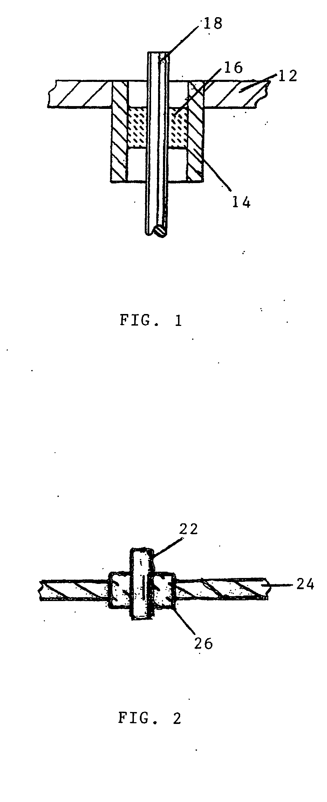

Turning now to the drawings, Figs. 1 and 2 show exemplary embodiments of glass-to-metal seals of both the conventional matched and compression types and of the mismatched type according to the present invention. As already discussed, it is not the specific configuration of the various components of the seals, but the materials of construction which delineates the prior art from the present invention seals.

As shown in Fig. 1, one exemplary embodiment of a glass-to-metal seal 10 consists of a casing 12 having an opening sized to receive a ferrule 14. The casing 12 can be the casing body itself or a lid secured to the open end of a container housing the electrode assembly (not shown), as is well known by those of ordinary skill in the art. The ferrule 14 is a cylindrically-shaped member hermetically secured to the casing in the opening, such as by welding. Preferably, the upper end of the ferrule is flush with the outer surface of the casing 12. The ferrule extends into the interior of the casing and supports an insulating glass 16 surrounding the perimeter of a terminal lead 18. The terminal lead 18 is coaxial with the ferrule and one end extends into the interior of the casing. This end is connected to one of the electrodes, typically the current collector (not shown) of the cathode electrode. The other end of the terminal lead 18 extends above the ferrule 14 and the outer surface of the casing 12 and provides for connection to one of the terminals of the load which the cell is intended to power.

The other lead of the cell is provided by the casing electrically connected to the anode electrode. This electrode configuration is referred to as a case-negative design. As is well known by those of ordinary skill in the art, the cell can also be provided in a case-positive configuration. In that case, the terminal lead 18 is connected to the anode current collector and the cathode electrode is electrically connected to the casing.

In any event, the glass must be sufficiently resistive to electrically segregate the casing 12 from the terminal lead 18 but be sealed to and between the ferrule 14 and the terminal lead. This sealing relationship must be sufficiently hermetic so that the cell is useful in applications such as powering implantable medical devices.

Fig. 2 shows another embodiment of an exemplary glass-to-metal seal 20 devoid of a ferrule. This assembly includes a terminal lead 22 sealed directly into an opening in the casing 24 by an intermediate insulating glass 26. Again, the casing can be the casing body itself or a lid for the casing, and the terminal lead is connected to the cathode while the casing serves as the anode terminal for a case-negative cell design.

In that respect, the materials of construction for both the exemplary embodiments of glass-to-metal seals shown in Figs. 1 and 2 must meet the various criteria set forth above. However, the present invention improves upon the hermeticity of the prior art seals by providing a glass-to-metal seal which is neither of a typical matched or compression type. Instead, the insulating glass of the present mismatched compression seal has a coefficient of thermal expansion which is significantly less than that of the terminal lead while the ferrule or casing body has a coefficient of thermal expansion which is significantly greater than that of the terminal lead. The resulting glass-to-metal seal is a compression seal with a terminal lead of mismatched thermal expansion. However, the resulting seal provides all of the critical design criteria for the use in an electrochemical cell of the type intended to power an implantable medical device.

A significantly less than or greater than coefficient of thermal expansion is one which differs from another by more than 2.0 x 10⁻⁶/°C.

Embodiments of a present invention mismatched compression glass-to-metal seal have the components of a ferrule or casing/insulating glass/terminal lead of: 304L SS/Cabal-12/446 SS, 304L SS/Cabal-12/29-4-2 SS, 304L SS/Cabal-12/titanium alloy (grades 1 to 4, 5 and 9), 304L SS/TA-23/446 SS, 304L SS/TA-23/29-4-2 SS and 304L SS/TA-23/titanium alloy (grades 1 to 4, 5 and 9). Cabal-12 glass is commercially available from Sandia National Laboratories. Specific embodiments have the coefficient of thermal expansion combinations shown in Tables 1 to 5.

**Table 1**

| Ferrule or Casing Body | Insulating Glass | Terminal Lead |
|---|---|---|
| 304L SS 19 x 10⁻⁶/°C (20-600°C) | Cabal-12 6.5 x 10⁻⁶/°C (20-500°C) | 446 SS 11.7 x 10⁻⁶/°C (20-600°C) |
| 304L SS 19 x 10⁻⁶/°C (20-600°C) | Cabal-12 6.5 x 10⁻⁶/°C (20-500°C) | 29-4-2 9.4 x 10⁻⁶/°C (21-100°C) |
| 304L SS 19 x 10⁻⁶/°C (20-600°C) | Cabal-12 6.5 x 10⁻⁶/°C (20-500°C) | Titanium Alloy (Gr. 1 - Gr. 4) 9.7 x 10⁻⁶/°C (20-540°C) |
| 304L SS 19 x 10⁻⁶/°C (20-600°C) | Cabal-12 6.5 x 10⁻⁶/°C (20-500°C) | Titanium Alloy (Gr. 5) 9.5 x 10⁻⁶/°C (20-540°C) |
| 304L SS 19 x 10⁻⁶/°C (20-600°C) | Cabal-12 6.5 x 10⁻⁶/°C (20-500°C) | Titanium Alloy (Gr. 9) 10.8 x 10⁻⁶/°C (20-540°C) |

**Table 2**

| Ferrule or Casing Body | Insulating Glass | Terminal Lead |
|---|---|---|
| 304L SS 19 x 10⁻⁶/°C (20-600°C) | TA-23 6.3 x 10⁻⁶/°C (20-695°C) | 446 SS 11.7 x 10⁻⁶/°C (20-600°C) |
| 304L SS 19 x 10⁻⁶/°C (20-600°C) | TA-23 6.3 x 10⁻⁶/°C (20-695°C) | 29-4-2 9.4 x 10⁻⁶/°C (21-100°C) |
| 304L SS 19 x 10⁻⁶/°C (20-600°C) | TA-23 6.3 x 10⁻⁶/°C (20-695°C) | Titanium Alloy (Gr. 1 - Gr. 4) 9.7 x 10⁻⁶/°C (20-540°C) |
| 304L SS 19 x 10⁻⁶/°C (20-600°C) | TA-23 6.3 x 10⁻⁶/°C (20-695°C) | Titanium Alloy (Gr. 5) 9.5 x 10⁻⁶/°C (20-540°C) |
| 304L SS 19 x 10⁻⁶/°C (20-600°C) | TA-23 6.3 x 10⁻⁶/°C (20-695°C) | Titanium Alloy (Gr. 9) 10.8 x 10⁻⁶/°C (20-540°C) |

By way of example, in an illustrative cell according to the present invention, the anode active material is an alkali metal selected from Group IA of the Periodic Table of Elements and contacted to a nickel current collector, and the cathode active material is of a carbonaceous material, fluorinated carbon, metal, metal oxide, mixed metal oxide or a metal sulfide, and mixtures thereof. Preferably, the cathode material is mixed with a conductive diluent such as carbon black, graphite or acetylene black or metal powders such as nickel, aluminum, titanium and stainless steel, and with a fluoro-resin powder binder material such as powdered polytetrafluroethylene or powdered polyvinylidene fluoride. The thusly prepared cathode active mixture is contacted to the cathode current collector which is a thin sheet or metal screen, for example, a titanium, stainless steel, aluminum or nickel screen.

The separator is of electrically insulative material, and the separator material also is chemically, unreactive with the anode and cathode active materials and both chemically unreactive with and insoluble in the electrolyte. In addition, the separator material has a degree of porosity sufficient to allow flow therethrough of the electrolyte during the electrochemical reaction of the cell. Illustrative separator materials include woven and non-woven fabrics of polyolefinic fibers or fluoropolymeric fibers including polyvylidine fluoride, polyethylenetetrafluoroethylene, and polyethylenechlorotrifluoroethylene laminated or superposed with a polyolefinic or fluoropolymeric microporous film. Suitable microporous films include a polytetrafluoroethylene membrane commercially available under the designation ZITEX (Chemplast Inc.), polypropylene membrane commercially available under the designation CELGARD (Celanese Plastic Company, Inc.) and a membrane commercially available under the designation DEXIGLAS (C. H. Dexter, Div., Dexter Corp.). The separator may also be composed of non-woven glass, glass fiber materials and ceramic materials.

The exemplary cell of the present invention having the mismatched compression glass-to-metal seal is activated with an ionically conductive electrolyte which serves as a medium for migration of ions between the anode and the cathode electrodes during the electrochemical reactions of the cell. By way of example, a suitable electrolyte for an alkali metal active anode has an inorganic or organic, ionically conductive salt dissolved in a nonaqueous solvent, and more preferably, the electrolyte includes an ionizable alkali metal salt dissolved in a mixture of aprotic organic solvents comprising a low viscosity solvent and a high permittivity solvent. The ionically conductive salt serves as the vehicle for migration of the anode ions to intercalate or react with the cathode active material. Preferably the ion-forming alkali metal salt is similar to the alkali metal comprising the anode.

A preferred material for the casing is titanium although stainless steel, mild steel, nickel-plated mild steel and aluminum are also suitable. The casing header comprises a metallic lid having a sufficient number of openings to accommodate the glass-to-metal seal 10, 20 having the terminal lead 18, 22 connected to the cathode electrode. An additional opening is provided for electrolyte filling. The casing lid comprises elements having compatibility with the other components of the electrochemical cell and is resistant to corrosion. The cell is thereafter filled with the electrolyte solution described hereinabove and hermetically sealed such as by close-welding a stainless steel plug over the fill hole, but not limited thereto. The cell of the present invention can also be constructed in a case-positive design.

Further, the cell of the present invention having the mismatched compression glass-to-metal seal 10, 20 is readily adaptable to secondary, rechargeable electrochemical chemistries. A typical negative electrode for a secondary cell is fabricated by mixing about 90 to 97 weight percent "hairy carbon" (U.S. Patent No. 5,443,928 to Takeuchi et al.) or graphite with about 3 to 10 weight percent of a binder material, which is preferably a fluoro-resin powder such as polytetrafluoroethylene (PTFE), polyvinylidene fluoride (PVDF), polyethylenetetrafluoroethylene (ETFE), polyamides, polyimides, and mixtures thereof. This negative electrode admixture is provided on a current collector such as of a nickel, stainless steel, or copper foil or screen by casting, pressing, rolling or otherwise contacting the admixture thereto.

In secondary cells, the positive electrode preferably comprises a lithiated material that is stable in air and readily handled. Examples of such air-stable lithiated cathode active materials include oxides, sulfides, selenides, and tellurides of such metals as vanadium, titanium, chromium, copper, molybdenum, niobium, iron, nickel, cobalt and manganese. The more preferred oxides include LiNiO₂, LiMn₂O₄, LiCoO₂, LiCo_{0.92}Sn_{0.08}O₂ and LiCo₁₋ₓNi₂O₂. The secondary cell chemistry is activated by the previously described electrolytes.

To charge such secondary cells, the lithium metal comprising the positive electrode is intercalated into the carbonaceous negative electrode by applying an externally generated electrical potential to the cell. The applied recharging electrical potential serves to draw lithium ions from the cathode active material, through the electrolyte and into the carbonaceous material of the negative electrode to saturate the carbon. The resulting LiₓC₆ negative electrode can have an x ranging between 0.1 and 1.0. The cell is then provided with an electrical potential and is discharged in a normal manner.

## Claims

1. An electrochemical cell comprising an anode electrode and a cathode electrode housed inside a casing and activated with an electrolyte wherein one of the anode electrode and the cathode electrode is connected to a terminal lead insulated from the casing by a glass-to-metal seal, said glass-to-metal seal having an insulating glass extending between and sealed to a support portion of the casing and the terminal lead wherein the insulating glass has a first coefficient of thermal expansion which is less than a second coefficient of thermal expansion of the terminal lead and wherein the second coefficient of thermal expansion is less than a third coefficient of thermal expansion of the casing support portion **characterised in that** the first coefficient of thermal expansion and the second coefficient of thermal expansion differ by more than 2.0 x 10⁻⁶/°C and the second coefficient of thermal expansion and the third coefficient of thermal expansion differ by more than 2.0 x 10⁻⁶/°C.

2. An electrochemical cell according to claim 1 wherein the first coefficient of thermal expansion ranges from 6.3 x 10⁻⁶/°C to 6.5 x 10⁻⁶/°C, the second coefficient of thermal expansion ranges from 9.4 x 10⁻⁶/°C to 11.7 x 10⁻⁶/°C and the third coefficient of thermal expansion is about 19 x 10⁻⁶/°C.

3. An electrochemical cell according to claim 1 or claim 2 wherein the insulating glass is selected from the group consisting of Cabal-12 and TA-23, the terminal lead is selected from the group consisting of 446 SS, 29-4-2 SS and a titanium alloy of grades 1 to 5 and 9, and the casing support portion is 304L SS.

4. An electrochemical cell according to any one of the preceding claims wherein the first coefficient of thermal expansion is 6.5 x 10⁻⁶/°C, the second coefficient of thermal expansion is one of 9.4, 9.5, 9.7, 10.8 and 11.7 x 10⁻⁶/°C and the third coefficient of thermal expansion is 19 x 10⁻⁶/°C.

5. An electrochemical cell according to any one of claims 1 to 4 wherein the first coefficient of thermal expansion is 6.3 x 10⁻⁶/°C, the second coefficient of thermal expansion is one of 9.4, 9.5, 9.7, 10.8 and 11.7 x 10⁻⁶/°C and the third coefficient of thermal expansion is 19 x 10⁻⁶/°C.

6. A glass-to-metal seal which comprises:
a) an insulating glass;
b) a terminal lead; and
c) a support
wherein the insulating glass extends between and seals to the terminal lead and the support surrounding the insulating glass, and wherein the insulating glass has a first coefficient of thermal expansion which is less than a second coefficient of thermal expansion of the terminal lead and wherein the second coefficient of thermal expansion is less than a third coefficient of thermal expansion of the support **characterized in that** the first coefficient of thermal expansion and the second coefficient of thermal expansion differ by more than 2.0 x 10⁻⁶/°Cand the second coefficient of thermal expansion and the third coefficient of thermal expansion differ by more than 2.0 x 10⁻⁶/°C.

7. A method for providing an electrochemical cell according to any one of claims 1 to 5 comprising the steps of:
a) providing an anode electrode and a cathode electrode in electrical association with each other housed inside a casing and activated with an electrolyte;
b) connecting one of the anode electrode and the cathode electrode to a terminal lead;
c) connecting the other of the anode electrode and the cathode electrode to the casing;
d) electrically segregating the terminal lead from the casing by the provision of an insulating glass extending between and sealing to the casing and the terminal lead wherein the insulating glass has a first coefficient of thermal expansion which is less than a second coefficient of thermal expansion of the terminal lead and wherein the second coefficient of thermal expansion is less than a third coefficient of thermal expansion of the casing **characterized in that** the first coefficient of thermal expansion and the second coefficient of thermal expansion differ by more than 2.0 x 10⁻⁶/°C and the second coefficient of thermal expansion and the third coefficient of thermal expansion differ by more than 2.0 x 10⁻⁶/°C thus providing a glass-to-metal seal according to claim 6.

## Patentansprüche

1. Batteriezelle bzw. elektrochemische Zelle, die eine Anoden-Elektrode und eine Kathoden-Elektrode umfasst, die innerhalb eines Gehäuses untergebracht sind und mit einer Akkumulatorsäure bzw. Elektrolyt aktiviert werden, worin entweder die Anoden-Elektrode oder die Kathoden-Elektrode mit einem Anschlussleiter verbunden ist, der von dem Gehäuse durch eine Glas-Metall-Verschmelzung bzw. Glas-Metall-Abdichtung isoliert ist, wobei die Glas-Metall-Verschmelzung bzw. Glas-Metall-Abdichtung ein Isolierglas aufweist, das sich zwischen und abdichtend zu einem Anschlussabschnitt des Gehäuses und dem Anschlussleiter erstreckt, wobei das Isolierglas einen ersten Wärmeausdehnungskoeffizienten aufweist, der niedriger ist, als ein zweiter Wärmeausdehnungskoeffizient des Anschlussleiters, und wobei der zweite Wärmeausdehnungskoeffizient des Anschlussleiters niedriger ist, als ein dritter Wärmeausdehnungskoeffizient des Anschlussabschnitts des Gehäuses, **dadurch gekennzeichnet, dass** sich der erste Wärmeausdehnungskoeffizient von dem zweiten Wärmeausdehnungskoeffizienten um mehr als 2,0·10⁻⁶/°C unterscheidet, und sich der zweite Wärmeausdehnungskoeffizient von dem dritten Wärmeausdehnungskoeffizienten um mehr als 2,0·10⁻⁶/°C unterscheidet.

2. Batteriezelle bzw. elektrochemische Zelle nach Anspruch 1, wobei sich der erste Wärmeausdehnungskoeffizient in einem Bereich von 6,3·10⁻⁶/°C bis 6,5·10⁻⁶/°C bewegt, und sich der zweite Wärmeausdehnungskoeffizient in einem Bereich von 9,4·10⁻⁶/°C bis 11,7·10⁻⁶/°C bewegt, und der dritte Wärmeausdehnungskoeffizient etwa 19·10⁻⁶/°C beträgt.

3. Batteriezelle bzw. elektrochemische Zelle nach Anspruch 1 oder Anspruch 2, wobei das Isolierglas aus der Gruppe ausgewählt wird, die aus Cabal-12 und TA-23 besteht, und der Anschlussleiter aus der Gruppe ausgewählt wird, die aus 446 SS, 29-4-2 SS und einer Titanlegierung der Grade1 bis 5 und 9 besteht und der Anschlussabschnitt des Gehäuses 304L SS ist.

4. Batteriezelle bzw. elektrochemische Zelle nach irgendeinem der vorangegangenen Ansprüche, wobei der erste Wärmeausdehnungskoeffizient 6,5·10⁻⁶/°C beträgt, der zweite Wärmeausdehnungskoeffizient einer aus 9,4, 9,5, 9,7, 10,8 und 11,7·10⁻⁶/°C ist, und der dritte Wärmeausdehnungskoeffizient 19·10⁻⁶/°C beträgt.

5. Batteriezelle bzw. elektrochemische Zelle nach irgendeinem der Ansprüche 1 bis 4, wobei der erste Wärmeausdehnungskoeffizient 6,3·10⁻⁶/°C beträgt, der zweite Wärmeausdehnungskoeffizient einer aus 9,4, 9,5, 9,7, 10,8 und 11,7·10⁻⁶/°C ist, und der dritte Wärmeausdehnungskoeffizient 19·10⁻⁶/°C beträgt.

6. Glas-Metall-Verschmelzung bzw. Glas-Metall-Abdichtung, welche Folgendes umfasst:
a) ein Isolierglas;
b) einen Anschlussleiter; und
c) eine Abstützung
wobei sich das Isolierglas zwischen und abdichtend zu dem Anschlussleiter und der Abstützung erstreckt, die das Isolierglas umgibt, und wobei das Isolierglas einen ersten Wärmeausdehnungskoeffizienten aufweist, der niedriger ist als ein zweiter Wärmeausdehnungskoeffizient des Anschlussleiters, und wobei der zweite Wärmeausdehnungskoeffizient des Anschlussleiters niedriger ist, als ein dritter Wärmeausdehnungskoeffizient der Abstützung, **dadurch gekennzeichnet, dass** sich der erste Wärmeausdehnungskoeffizient von dem zweiten Wärmeausdehnungskoeffizienten um mehr als 2,0·10⁻⁶/°C unterscheidet, und sich der zweite Wärmeausdehnungskoeffizient von dem dritten Wärmeausdehnungskoeffizienten um mehr als 2,0·10⁻⁶/°C unterscheidet.

7. Verfahren zum Bereitstellen einer Batteriezelle bzw. elektrochemische Zelle nach irgendeinem der Ansprüche 1 bis 5, das folgende Schritte umfasst:
a) es wird eine Anoden-Elektrode und eine Kathoden-Elektrode in elektrischer Verbindung miteinander bereitgestellt, die innerhalb eines Gehäuses untergebracht sind und mit einer Akkumulatorsäure bzw. Elektrolyt aktiviert werden;
b) es wird entweder die Anoden-Elektrode oder die Kathoden-Elektrode mit einem Anschlussleiter verbunden
c) es wird die andere der Anoden-Elektrode oder der Kathoden-Elektrode mit dem Gehäuse verbunden;
d) es wird der Anschlussleiter von dem Gehäuse durch die Bereitstellung eines Isolierglases elektrisch isoliert, das sich zwischen und abdichtend zu dem Gehäuse und dem Anschlussleiter erstreckt, wobei das Isolierglas einen ersten Wärmeausdehnungskoeffizienten aufweist, der niedriger ist als ein zweiter Wärmeausdehnungskoeffizient des Anschlussleiters, und wobei der zweite Wärmeausdehnungskoeffizient des Anschlussleiters niedriger ist, als ein dritter Wärmeausdehnungskoeffizient des Gehäuses ist, **dadurch gekennzeichnet, dass** sich der erste Wärmeausdehnungskoeffizient von dem zweiten Wärmeausdehnungskoeffizienten um mehr als 2,0·10⁻⁶/°C unterscheidet, und sich der zweite Wärmeausdehnungskoeffizient von dem dritten Wärmeausdehnungskoeffizienten um mehr als 2,0·10⁻⁶/°C unterscheidet, womit eine Glas-Metall-Verschmelzung bzw. Glas-Metall-Abdichtung nach Anspruch 6 bereitgestellt wird.

## Revendications

1. Cellule électrochimique comprenant une électrode anodique et une électrode cathodique logées à l'intérieur d'un boîtier et activées avec un électrolyte, où l'une parmi l'électrode anodique et l'électrode cathodique est raccordée à une connexion de borne isolée du boîtier par un joint verre - métal, ledit joint verre - métal ayant un verre isolant s'étendant entre une partie support du boîtier et la connexion de borne et y formant un joint, où le verre isolant a un premier coefficient de dilatation thermique qui est inférieur à un deuxième coefficient de dilatation thermique de la connexion de borne et où le deuxième coefficient de dilatation thermique est inférieur à un troisième coefficient de dilatation thermique de la partie support du boîtier, **caractérisée en ce que** le premier coefficient de dilatation thermique et le deuxième coefficient de dilatation thermique diffèrent de plus de 2,0 x 10⁻⁶/°C et le deuxième coefficient de dilatation thermique et le troisième coefficient de dilatation thermique diffèrent de plus de 2,0 x 10⁻⁶/°C.

2. Cellule électrochimique selon la revendication 1, dans laquelle le premier coefficient de dilatation thermique va de 6,3 x 10⁻⁶/°C à 6,5 x 10⁻⁶/°C, le deuxième coefficient de dilatation thermique va de 9,4 x 10⁻⁶/°C à 11,7 x 10⁻⁶/°C, et le troisième coefficient de dilatation thermique est d'environ 19 x 10⁻⁶/°C.

3. Cellule électrochimique selon la revendication 1 ou la revendication 2, dans laquelle le verre isolant est choisi dans le groupe constitué par Cabal-12 et TA-23, la connexion de borne est choisie dans le groupe constitué par 446 SS, 29-4-2 SS et un alliage au titane des qualités 1 à 5 et 9, la partie support du boîtier est en 304L SS.

4. Cellule électrochimique selon l'une quelconque des revendications précédentes, dans laquelle le premier coefficient de dilatation thermique est de 6,5 x 10⁻⁶/°C, le deuxième coefficient de dilatation thermique est un coefficient parmi 9,4, 9,5, 9,7, 10,8 et 11,7 x 10⁻⁶/°C et le troisième coefficient de dilatation thermique est de 19 x 10⁻⁶/°C.

5. Cellule électrochimique selon l'une quelconque des revendications 1 à 4, dans laquelle le premier coefficient de dilatation thermique est de 6,3 x 10⁻⁶/°C, le deuxième coefficient de dilatation thermique est un coefficient parmi 9,4, 9,5, 9,7, 10,8 et 11,7 x 10⁻⁶/°C et le troisième coefficient de dilatation thermique est de 19 x 10⁻⁶/°C.

6. Joint verre - métal, qui comprend :
a) un verre isolant ;
b) une connexion de borne ; et
c) un support
dans lequel le verre isolant s'étend entre la borne de connexion et le support entourant le verre isolant et y forme un joint, et dans lequel le verre isolant a un premier coefficient de dilatation thermique qui est inférieur à un deuxième coefficient de dilatation thermique de la connexion de borne et où le deuxième coefficient de dilatation thermique est inférieur à un troisième coefficient de dilatation thermique de la partie support du boîtier, **caractérisé en ce que** le premier coefficient de dilatation thermique et le deuxième coefficient de dilatation thermique diffèrent de plus de 2,0 x 10⁻⁶/°C et le deuxième coefficient de dilatation thermique et le troisième coefficient de dilatation thermique diffèrent de plus de 2,0 x 10⁻⁶/°C.

7. Procédé de production d'une cellule électrochimique selon l'une quelconque des revendications 1 à 5, comprenant les étapes consistant à :
a) fournir une électrode anodique et une électrode cathodique en association électrique l'une avec l'autre, logées à l'intérieur d'un boîtier et activées avec un électrolyte ;
b) connecter une parmi l'électrode anodique et l'électrode cathodique à une connexion de borne ;
c) connecter l'autre parmi l'électrode anodique et l'électrode cathodique au boîtier ;
d) effectuer une isolation électrique de la connexion de borne vis-à-vis du boîtier en prévoyant un verre isolant s'étendant entre le boîtier et la connexion de borne et y formant un joint, dans lequel le verre isolant a un premier coefficient de dilatation thermique qui est inférieur à un deuxième coefficient de dilatation thermique de la connexion de borne et où le deuxième coefficient de dilatation thermique est inférieur à un troisième coefficient de dilatation thermique de la partie support du boîtier, **caractérisé en ce que** le premier coefficient de dilatation thermique et le deuxième coefficient de dilatation thermique diffèrent de plus de 2,0 x 10⁻⁶/°C et le deuxième coefficient de dilatation thermique et le troisième coefficient de dilatation thermique diffèrent de plus de 2,0 x 10⁻⁶/°C, permettant ainsi d'obtenir un joint verre - métal selon la revendication 6.
